Europäisches Patentamt

European Patent Office

Office européen des brevets

(11) Publication number: **0 275 810 B1**

(12) **EUROPEAN PATENT SPECIFICATION**

(45) Date of publication of patent specification: **28.10.92** (51) Int. Cl.5: **A47J 17/16**

(21) Application number: **87560002.5**

(22) Date of filing: **13.11.87**

(54) **Fruit peeler.**

(30) Priority: **24.11.86 ES 8603158**

(43) Date of publication of application:
**27.07.88 Bulletin 88/30**

(45) Publication of the grant of the patent:
**28.10.92 Bulletin 92/44**

(84) Designated Contracting States:
**AT BE CH DE ES FR GB GR IT LI LU NL SE**

(56) References cited:
**FR-A- 1 248 668**
**GB-A- 286 415**
**US-A- 4 137 839**

(73) Proprietor: **PELANAR, Sociedad Limitada
Castell, 23
E-46687 ALBALAT DE LA RIBERA(ES)**

(72) Inventor: **Perez Gonzalvo, José
C. Cavallers, 2
E-46687 Albalat de la Ribera(ES)**

(74) Representative: **Sanz-Bermell Martinez, Alejandro
Játiva, 4
E-46002 Valencia(ES)**

Rank Xerox (UK) Business Services

## Description

The present invention consists of a device to peel citurs and other fruit provided with a skin.

The ideal conditions for peeling one of these fruits are approximately those given during the action carried out by the hand of man.

Thus, the knife has to separate a quantity of skin depending of its thickness. Usually one holds the orange (for example) in one hand rotationing it slightly, whilst with the other hand carrying the knife, one carries out the cutting movement in opposite direction to the rotation.

Here arises another problem. The incision of the knife on the fruit has the tendency to follow the trajectory which its profile determines. When peeling is manual, the relative position of the knife with regard to the fruit is corrected modifying it continously.

As a background of this invention the following prior art is quoted:

GB -A- 286 415 consists of a manually operated machine wich, when operated by handle turns the fruit and causes a fixed cutter on a supporting arm to move linearly. This device is very similar to that of the U.S. 4 137 839 which is mentioned below. The movement of the cutter as regards the fruit is not even, since the cutter is fixed and the fruit becomes increasingly larger as it reaches the part of its greatest diameter.

U.S. -A- 4 137 839, consisting of a machine essentially identical to that already mentioned, operated electrically, in which the turning of the fruit and the movement of the cutter are linear. In this device the cutter is fixed.

FR -A- 1 243 668, consists of a cutter assembly for peeling fruit. This cutter is rotatory and is attached to a complicated device. It cuts along its periphery or a bevel made in periphery, and even by means of star shaped attached parts provided on it. Its structure is out of the ordinary and the device corresponding to the patent applied for is not common, cutting along the inner edge of the cutter and also available with to and from movement.

The present device consists essentially of an incisive and rotating cutter running over the surface of the fruit.

The object of the rotating is that its trajectoory be parallel to de surface of the fruit skin, and not parallel-concentric to the axis of rotation of the fruit which would produce an unequal peeling.

In order to effect the course over the surface of the fruit to separate on each unit the necessary thickness of the skin, will be essential a mechanism that produces mechanically:

- The rotation of the fruit.
- The permanent incision of the knife on the fruit.
- The rotating movement of the knife.
- The moving of the knife so that it passes over the whole outside of the fruit.

As simple example, we are going to describe an accomplishment by which can be appreciated the features of this invention.

The rotation of the fruit is easily carried out by placing same on a rotating base.

The permanent incision of the knife on the fruit is made by means of the pressure a spring exerts on the arm carrying the knife. This incision penetrates only up to a determined thickness thanks to a stop which prevents the knife to get deeper than necessary. This principally is produced with the machines of slow movement , and in consequence in those of domestic use. But with machines of high speed, particularly in industry, can be produced the same result avoiding the stop, as owing the circunnstance that the knife rotates at such high speed, it has no time to penetrate into the fruit.

The movement of the rotating knife is permanent. It can be moved by an independent motor, but economic reasons may advise the movement of the knife coming from the same motor.

The most problematic is the movement of the knife over the surface of the fruit. It has to be kept in mind that the fruit owing to run hielicoidally begins its movement at a small diameter, increasing it and reducing it again at the opposite zone of the fruit.

If the movement of the knife were always the same, it would carry out several passages at the same place at the zones of smaller diameter, whilst at the zone of greatest diameter - specially if it is a big fruit - the peeling at this part would not be sufficient.

Nevertheless in industrial machines it is possible that the movement of the knife be steady, as owing to the rapid rotation of the fruit, the peeling does result uniform.

The most economic and convenient is to provide a profile of proportional cam being this always expressed in relation to a machine as described below, of a relatively slow movement. There, the cam produces a knife passing movement being proportional to the diamenter at each position. This explanation will be further detailed in the following.

A possible execution for machines of slow movement could also be a mechanism producing a proportional movement depending on the position the arm occupies with regard to the rotation axis of the fruit. However the effect by means of the mechanical device described below is more reliable.

For a better and more understandable description, there are affixed to this specification being part of it, a set of drawings which as way of example describe an execution of the device according to the proposed method.

Fig. 1 is a side view of the device of the invention.

Fig. 2 shows a ground plan of the same device.

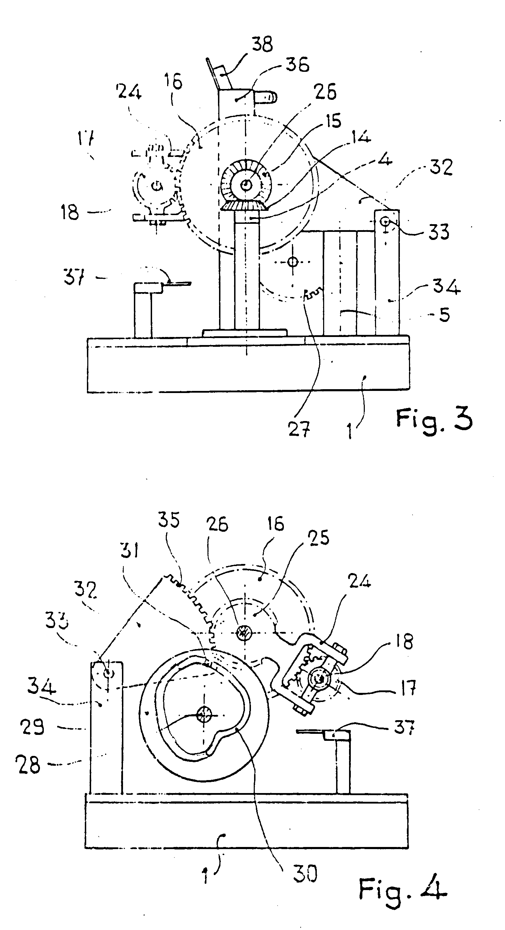

Fig. 3 is a side view corresponding to the part considered as back of the device shown in fig. 1 and 2.

Fig. 4 is a section corresponding to the line IV-IV on fig. 2.

There has to be taken into account that the device has been represented in the mentioned figures only as concerning its mechanism, as same will be completed by a conventional frame that offers the suitable esthetic aspect.

Based on these figures the device of the invention is constituted by a supporting base (1) wich on turn constitutes a plattform on which are mounted all the elements or mechanisms of the device having a small motor (2) driven by means of a corresponding supply. Said, motor (2) drives a conventional and suitable system or gears (3) the projecting shaft of which moves over a belt drive and pinions simultaneously three shafts (4), (5), and (6), showing this latter one at its upper or free and a kind ofof head (this shaft is arranged vertically and also the two). This head presents some some pointed apppendixas (7) constituting means on which the fruit (13) to be peeled will be fixed. At its upper part will the fruit be held by means of another appendix (8) forseen in the rotating head (9) mounted at the end of a tilting arm (10) permanently kept downwards by the action of a spring (11) This tilting is limited upwards as well as downwards by the special form of a lever (12) which, when being actuated downwards, will produce the lifting or upwards tilting of said arm (10) thus making possible to place the fruit (13) to be peeled between the appendixes (7) of the shaft (6) and the appendix (8) of the head (9) of the arm (10).

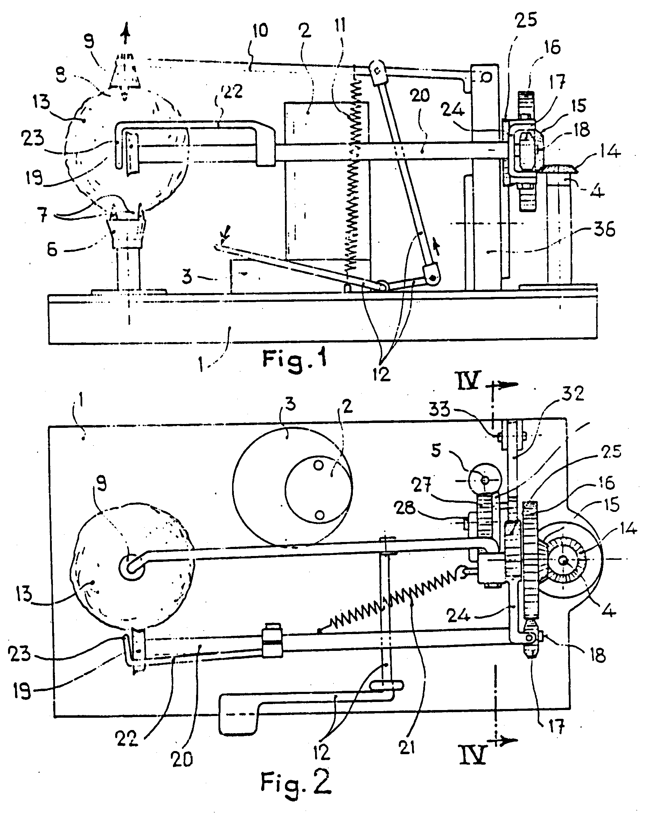

The shaft (4) bears at its upper end a conical pinion (14) which engages another complementary one (15) being integral and concentric. (i.e. mounted on the same shaft) with the crown (16) on the periphery of which engages another pinion (17) being integral of an axis of revolution (18) bearing at its other end the cutting knife (19). The cutting knife (19), as has already been pointed out, can be rotating as shown in the execution represented by way of example, taking in this case a shape that may be considered as truncoconical or circular; or this cutting knife (19) may have a back and forth movement in which case it will logically be straight. With regard to the above mentioned pinion (17) it must have a special form in order to be able to engage at each moment with the pinion or crown (16). This special form will be curved-convex or rounded, as outlined in fig. 1. The axis of revolution (18) is protected by a tubular arm (20) which is kept by a spring (21) towards a position against the fruit (13). On said tubular arm (20) is mounted an elongated element (22) having the end elbowed in a rounded from (23) which remains near the cutting knife (19) and serves as buffer stop against the lateral surface of the fruit (13) so that the knife 19 does not pierce more than necessary on it. About this stop we have made clear its purpose in slow moving machines.

The conical pinion (17) and thus the tubular arm (20) are supported on a fork (24) integral of a pinion or crown (25) mounted on the shaft (26) of the crown (16) in a rotating way with regard to these last two elements, when there is used a rotating cutting knife, because if there is employed a cutting knife with a back and forth movement, the axle (25) of said knife will move in a reciprocating movement.

Wit regard to the shaft (5), same is formed by a screw pin on which engages a pinion (27) mounted on a shaft (28) integral with a cam (29) provided with a special formed groove (30) in which is guided a pivot (31) belonging to a toothed segment (32) which is articulated at its other end to an axis of revolution (33), on a support (34). The toothed segment (32) engages on the previously mentioned pinion or crown (25). The teeth of this segment bear the reference number (35).

The whole of the mechanisms is completed with a support (36) on which are mounted the shafts (26) and (28), as also the end of the arm (10). The ensemble is also completed with some end strokes (37) and (38).

According to the described structure the device works as follows:

First the fruit to be peeled is placed beween the appendixes (7) of the shaft (6) and the appendix (8) of the head (9) corresponding to the arm (10). For this purpose it is necessary to move the lever (12) in order to lift this arm (10) and thus to be able to introduce and place the fruit between said appendixes (7) and (8). Once the fruit has been well fixed, is the motor (2) set in motion by means of the corresponding engaging switch. With the reducing gear (3) are three shafts (4), (5) and (6) set to rotate, so that the rotation ot the shaft (6) makes that the fruit begins to rotate on its own axis being mounted on the shaft (6). At the same time and as consequence of the rotation of shaft (4) will be produced the rotation of the cutting knife (19) according to what has previously been exposed, so that the peeling of the fruit is started. It has already been mentioned above that the cutting knife (19), though on the drawings its execution is made in a rotating way, can its movement be back and forth. Simultaneously, and by birtue of the rotation of the shaft (5) will be effected the slow rotation of the toothed segment (32) which by engaging the pinion or crown (25) effects its slow rotation thus producing the angular displacement of the fork (24) and therefore of the tubular arm (20) on which is mounted the shaft of the knife (19) thus producing the gradual elevation of the knife (19) in order to move same forward along the fruit and thus effecting its peeling. This movement continues until the fork (24) contacts with the end of the upper stroke (38) at which moment the knife (19) has reached the upper part of the fruit. In case there is required a second passing, the mentioned movements are started again, but in this case in opposite direction, i.e. that the toothed segment rotates in opposite direction and therefore the movement of the arm (20) will be descending, the knife going downward lengthwise the surface of the fruit, all this as consequence of the special shape of the groove (30) corresponding to the cam (29) which makes said toothed segment (32) rotate in opposite direction, and until the descending arm (20) gets in touch with the end of the lower stroke (37) indicating that the knife has already reached the lower part of the fruit.

All these movements can be effected as many times as desired until the fruit is perfectly peeled, this in case there is needed more than one passing which will occur when the skin or peel be thicker than normal.

Finally, there is necessary to point out the fact that the end strokes (37) and (38) are provided to switch off the motor (2) when the knife reaches the upper and lower ends of the fruit to be peeled. The mechanism will also have a switch, which is not shown, and the object of which is to cancel the end of the upper stroke (38) in case it were necessary to effect a second passing of peeling, i.e. when this second passing is going to be carried out, said switch will cancel the end stroke of the upper stroke (38), and thus when the cutting knife reaches the upper part, the motor will not stop, but continue to operate and the cutting knife will move downwards.

The object of the cam (29) is that the peeling is effected uniformly, i.e. that the movement be slower when the cutting knife is acting on the central zone of the fruit, qnd be quicker when it is nearing the upper and/or lower end zones.

## Claims

1. Device for peeling citric and other type of fruits with a skin, of the kind that has the fruit (13) fixed on a rotating base (6), provided with sharp points (7) for holding it in place, and with a cutter (19), which travels over the outer surface of the fruit, mounted at the end of a tilting arm (10) for separating the skin from the pulp, characterized in that the movement of the cutter (19) is proportional to the rotating movement of the base (6), and proportional to the rotating movement which produces the translation of the cutter over the surface of the fruit, and in that the cutter (19) is placed tangentially to the surface of the fruit, along the tangential line, the speed of the movement of the cutter over the fruit being variable, its angular movement speed being regulated by a cam (29) with a suitable profile, or a shape that corresponds approximately to that of a heart, so that the movement of the cutter is slower when acting on the central zone of the fruit, and quicker when acting near the end zones.

2. Device, according to claim 1, characterized in that the cutter is provided with back and forth movement.

3. Device, according to claim 1, characterized in that the rotating cutter (19), is moved by means of a shaft joined to an electric motor, having a rotating speed proportional to to the rotating movement of the base.

4. Device, according to claim 1, characterized in that the cutter (19), and the arm holding the cutter (20) are moved tangentially over the surface of the fruit, in such a way that the whole arm holding the cutter describes a radial arc in relation to the geometric center of the fruit.

5. Device, according to claims 1 and 4, characterized in that the radial movement (24/25 - 32) of the cutter holder arm (20) takes place in conjunction with a mechanism that tightens this arm towards the geometrical centre of the fruit, perpendicularly to its surface, in accordance with the fork shaped joint (24) of the arm, much as a spring (21) or an hidraulic mechanism.

6. Device, according to claims 1 to 5, characterized in that it has a single motor (3) which moves the shaft of the rotating base (6), the cutter (9) and the radial action mechanism of the cutter (24/25 - 32).

7. Device, according to claims 1 to 5, characterized in that it has an independent electric motor for each ot the three shafts.

8. Device, according to claims 1 to 6, characterized in that the shaft (18) which makes the cutter rotate, has a pinion (17) on its free upper end; this pinion being convex and gearing into another one having a greater diameter (16) joined to a smaller diameter crown wheel (15) which in turn meshes with onother crown wheel joined to a crown (14) the shaft (18) of which extends over a long section in order to mount on its other end a cutting knife which can move around or back and forth.

9. Device, according to claims 1 to 6, and 8, characterized in that the shaft (18) holding the cutter is protected by a secure envelopping tubular arm articulated by mean of a fork (24) to crown or pinion (17) which is mounted so as to turn around the same shaft thanks to which it gears into the crown having a bigger diameter (16).

10. Device, according to claims 8 and 9, characterized in that that the movement of the shafts which transfers the arm holding the cutter is produced by a spindle (5) into which gears a new pinion (27) to the shaft of which is joined a cam provided with a slot (30) the profile of which is suitable for guiding a pivot (31) belonging to a toothed section (35) which gears into the pinion or crown (25) joined to the fork (24) supporting the arm which protects the shaft of the cutter.

11. Device, according to claims 1 to 10, characterized in that the arm holding the cutter has a sensor element (22) which prevents in relative slow machines from piercing into the fruit more than necessary.

12. Device, according to claims, 1 to 10, characterized in that the sensor has the shape or a canal for evacuating the skin separated from the fruit.

13. Device, according to claims 1 to 10, characterized in that in fast rotating machines, the evacuation of the skin after bing cut is easier thanks to the push produced by a fluid under pressure conveniently orientated.

14. Device, according to claims 1 to 13, in that it is provided with ending strokes (37-38) at the upper and lower ends of the arcs described by the spindle (24) joined to the shaft holding the knife.

**Patentansprüche**

1. Vorrichtung zum Schälen von Zitrus- und anderen Schalenfrüchten, die darin besteht, dass die Frucht (13) auf einem rotierenden Halter befestigt (6) ist, welcher mit scharfen Spitzen (7) zum Festhalten versehen ist, und aus einem Messer (19), das sich über die äussere Fruchtoberfläche bewegt, und das am Ende eines Kipparmes (10) befestigt ist zum Abschälen der Schale von dem Fruchtfleisch. Die Vorrichtung ist dadurch gekennzeichnet, dass die Bewegung des Messers (19) sich proportional zu der rotierenden Bewegung des Halters (6) verhält und proportional zur Drehbewegung, welche die Übertragung des Messers über die Fruchtoberfläche verursacht. Das Messer (19) ist tangential zur Fruchtoberfläche angeordnet ist und zwar entlang der Tangentiallinie. Die Geschwindigkeit der Messerbewegung über die Frucht ist dabei variabel, wobei ihre Winkelgeschwindigkeit durch einen entsprechend ausgebildeten Mitnehmer (29) in herzähnlicher Form reguliert wird, wodurch die Bewegung des Messers langsamer ist, wenn es den inneren Teil der Frucht bearbeitet und sich zu den Endzonen hin schneller bewegt.

2. Vorrichtung nach Anspruch 1, dadurch gekennzeichnet, dass das Messer mit einer Vor-und Zurückbewegung versehen ist.

3. Vorrichtung nach Anspruch 1, dadurch gekennzeichnet, dass das rotierende Messer (19) durch eine mit einem Elektromotor verbundene Welle angetrieben wird und die Drehgeschwindigkeit sich proportional zur Drehbewegung des Halters verhält.

4. Vorrichtung nach Anspruch 1, dadurch gekennzeichnet, dass das Messer (19) und der sie tragende Arm (20) tangential über die Fruchtoberfläche bewegt werden und zwar derart, dass der das Messer tragende Arm in seiner Gesamtheit einen radialen Bogen im Verhältnis zum geometrischen Mittelpunkt der Frucht beschreibt.

5. Vorrichtung nach Anspruch 1 und 4, dadurch gekennzeichnet, dass die radiale Bewegung (24/25 - 32) des das Messer tragenden Armes (20) im Zusammenspiel mit einem Mechanismus erfolgt, der diesen Arm in Richtung des geometrischen Mittelpunktes der Frucht komprimiert und zwar senkrecht zu seiner Oberfläche, in Übereinstimmung mit einem gabelförmigen Gelenk (24) des Armes, zum Beispiel eine Feder (21) oder ein hydraulischer Mechanismus.

6. Vorrichtung nach Anspruch 1 bis 5, dadurch gekennzeichnet, dass sie einen Einzelmotor (3) hat, der die Welle der rotierenden Stütze (6), der Schneidvorrichtung (9) und des Mechanismus für die radiale Bewegung des Messers (24/25 - 32) antreibt.

7. Vorrichtung nach Anspruch 1 bis 5, dadurch gekennzeichnet, dass sie für jede der drei Wellen einen separaten Elektromotor hat.

8. Vorrichtung nach Anspruch 1 bis 6, dadurch gekennzeichnet, dass die das Messer drehende Welle (18) an ihrem oberen freien Ende mit einem Ritzel (19) versehen ist. Dieses Ritzel ist konvex und greift in ein anderes mit einem grösseren Durchmesser (16) ein, das wiederum mit einem im Durchmesser kleineren Zahnrad (1b) verbunden ist. Dieses seinerseits greift in ein weiteres Zahnbrad ein, das über eine Zahnplatte (14) mit der Welle (18) verbunden ist oder welche sich über einen langen Abschnitt erstreckt, um am anderen Ende ein Schneidmesser anzubringen, das sich drehen bzw. vor und zurück bewegen kann.

9. Vorrichtung nach Anspruch 1 bis 6 und 8, dadurch gekennzeichnet, dass die das Messer tragende Welle (18) durch einen sicheren, sie umschliessenden röhrenförmigen Arm geschützt ist und durch eine Gelenkgabel (24) mit der Zahnstange oder dem Ritzel (14) verbunden ist, das so montiert ist, dass es die Welle drehen kann, so dass diese in das Ritzel mit dem grösseren Durchmesser (16) eingreifen kann.

10. Vorrichtung nach Anspruch 8 und 9, dadurch gekennzeichnet, dass die Bewegung der Wellen, welche der das Messer tragende Arm überträgt, durch eine Spindel (5) erfolgt, in die ein neues Ritzel (27) eingreift, an dessen Welle ein mit einer Ritze (30) versehener Mitnehmer angebracht ist, der so gestaltet ist, dass er einen Bolzen (31) eines Zahnabschnittes (35) lenken kann. Dieser Zahnabschnitt greift in das Ritzel (25) ein, welches mit der den Arm tragenden Gabel (24) verbunden ist, welche die Messerwelle schützt.

11. Vorrichtung nach Anspruch 1 bis 10, dadurch gekennzeichnet, dass der das Messer tragende Arm mit einem Fühler (22) versehen ist, der verhindert, dass bei relativ langsamen Maschinen mehr als notwendig in die Frucht eingedrungen wird.

12. Vorrichtung nach Anspruch 1 bis 10, dadurch gekennzeichnet, dass der Fühler als Kanal ausgebildet ist zwecks Abführung der von der Frucht abgeschälten Schale.

13. Vorrichtung nach Anspruch 1 bis 10, dadurch gekennzeichnet, dass bei schnell rotierenden Maschinen die Abführung der Schale nach dem Schneiden einfacher ist dank einer Schiebbewegung durch ein unter Druck stehendes, entsprechend ausgerichtetes Medium.

14. Vorrichtung nach Anspruch 1 bis 13 dadurch gekennzeichnet, dass sie mit Endbegrenzern (37-38) am oberen und unteren Ende der Bogen, die die mit der Messerwelle verbundene Spindel (24) ausführt, versehen ist.

**Revendications**

1. Appareil pour éplucher les agrumes et tout autre type de fruit à peau, et qui fixe le fruit à éplucher (13) sur une base rotative (6), qui possède des pointes aigües (7) qui permettent de le mantenir en place, et avec une lame coupante (19) qui se déplace sur toute la surface du fruit, monteé sur le bout d'un bras tendeur (10) pour séparer la peau de la pulpe, que se caractérise par le fait que le mouvement de la lame coupante (19) est proportional au movement rotatif de la base (6), et proportional au movement que produit la translation de la lame coupante tout au long de la surface du fruit, en ce que la lame coupante (19) est placée tangentiallement par raport à la surface du fruit, tout au long de la ligne tangentielle, la vitesse du mouvement de la lame coupante sur le fruit étant variable, la vitesse de son mouvement agulaire étant réglée par une came (29) possedant un profil adéquat, ou bien une forme qui correspond à peu près à celle d'un coeur, de telle sorte que le mouvement de la lame coupante est plus lent lorsqu'elle se trouve près des zones des extrémités.

2. Appareil, selon la revendication 1, qui a comme caractéristique le fait que la lame coupante est provue de mouvement arrière et avant.

3. Appareil, selon la revendication 1, qui a comme caractétristique le fait que la lame coupante rotative (19) est entraînée par un mécanisme ou un arbre solidaire à un moteur électrique, et qui possède une vitesse de rotation proportionnel au mouvement rotatif de la base.

4. Appareil, selon les revendication 1, qui a comme caractérisque le fait que la lame coupante (19) ainsi que le bras que supporte la lame coupante (20) sont entraînés tangentiellement tout au long de la surface du fruit de telle sorte que l'ensemble du bras qui supporte la lame coupante décrit un arc radial par rapport au centre géométrique du fruit.

5. Appareil, selon les revendications 1 et 4, qui a comme caractéristique la fait que le mouvement radial (25/25 - 32)du bras supportant la lame coupante (20) est placé en conjunction avec un mécanisme que serre ce bras vers le centre géométrique du fruit, perpendiculairement à ce surface, suivant le joint en forme de fourche du bras (24) tel qu'un ressort (219 ou un mécanisme hydraulique.

6. Appareil, selon les revendications 1 à 4, qui a comme caractéristique le fait qu'il possède un seul moteur (3) qui entraîne l'arbre de la base rotative (b), la lame coupante (9) et le mécanisme d'action radiale de la lame coupante (24/25 - 32).

7. Appareil, selon les revendications 1 à 5, qui a comme caractéristique le fait qu'il possede un moteur électrique indépendent pour chacun des trois arbres.

8. Appareil, selon les revendications 1 à 6, qui a comme caractéristique le fait que l'arbre (18) qui provoque le mouvement de la lame coupante rotative, possède un pignon (17) sur son extrémité libre supérieure; ce pignon étant convexe et engrenant sur un autre qui possède un plus grande diamètre (16) solidaire à une couronne de plus petit diamètre (15) qua à son tour engrène sur une autre couronne solidaire à une couronne (14) dont l'axe (18) s'etend tout au long d'une longue section afin de monter sur son autre extrémité une lame coupante qui peut tourner ou se mouvoir en arrière et en avant.

9. Appareil, selon les revendications 1 à 6 et 8, qui a comme caractéristique le fait que le bras (18) qui supporte la lame coupante est protégé par un bras tubulaire de sécurité enveloppant et articulé au moyen d'une fourche (24) à une couronne ou un pignon (17) qui est monté de telle sorte qu'il puisse tourner autour du même bras grâce auquel il mène la couronne qui possède le plus grand diamètre (16).

10. Appareil, selon les revendications 8 et 9, qui a comme caractéristique le fait que le mouvement des arbres qui transmettent au bras qui supporte la lame coupante est produit par un axe (5) dans lequel il mène un nouveau pignon (27) dont l'arbre est solidaire à une came qui possède une rainure (30) dont le profil permet de guider un pivot (31) qui appartient à une section dentée (35) qui mène au pignon ou à une couronne (25) solidaire a la fourche (24) qui supporte le bras protégeant l'arbre de la lame coupante.

11. Appareil, selon les revendications 1 à 10, qui a comme caractéristique le fait que le bras supportant la lame coupante possede un élément senseur (22) qui evite dans les machines relativement lentes de pénétrer dans la fruit plus qu'il n'est necessaire.

12. Appareil, selon les revendications 1 à 10, qui a comme caractéristique le fait que le senseur possède la forme d'un canal afin d'évacuer la peau séparée du fruit.

13. Appareil, selon les revendications 1 à 10, qui a comme caractéristique le fait que pour les machines qui tournent à haute vitesse l'évacuation de la peau après être épluchée est simplifiée grâce à la poussée produite par un fluide sous pression convenablement orienté.

14. Appareil, selon les revendications 5 à 10, pourvu de butoirs (37, 38) sur les extrémités supérieure en inférieure des arcs décrits par l'axe (24) solidaire au bras qui maintient le couteau.

Fig.1

Fig. 2

Fig. 3

Fig. 4